# FASCICULE DE BREVET EUROPEEN

(11) **EP 3 074 609 B1**
(45) Date de publication et mention de la délivrance du brevet: **18.03.2020**
(21) Numéro de dépôt: 14809494.9
(22) Date de dépôt: 19.11.2014
(51) Int. Cl.: F01D 17/16, F04D 29/56, F04D 29/64

(54) **DISPOSITIF DE GUIDAGE D'AUBES DE REDRESSEUR A ANGLE DE CALAGE VARIABLE DE TURBOMACHINE ET PROCÉDÉ D'ASSEMBLAGE D'UN TEL DISPOSITIF.**
VORRICHTUNG ZUR FÜHRUNG VON SYNCHRONRINGSCHAUFELN MIT VERSTELLBAREM NEIGUNGSWINKEL EINES TURBINENMOTORS UND VERFAHREN ZUR MONTAGE SOLCH EINER VORRICHTUNG
DEVICE FOR GUIDING SYNCHRONIZING RING VANES WITH VARIABLE PITCH ANGLE OF A TURBINE ENGINE AND METHOD FOR ASSEMBLING SUCH A DEVICE

(30) Priorité: 29.11.2013 FR 1361878
(43) Date de publication de la demande: 05.10.2016
(73) Titulaire: Safran Aircraft Engines, 75015 Paris (FR)
(72) Inventeur: MOUTON, Clémentine Charlotte Marie, 77550 Moissy-Cramayel (FR); BELMONTE, Olivier, 77550 Moissy-Cramayel (FR)
(74) Mandataire: Cabinet Beau de Loménie
(86) Numéro de dépôt international: PCT/FR2014/052958
(87) Numéro de publication internationale: WO 2015/079144

(56) Documents cités:
- EP-A1- 0 204 615
- EP-A1- 1 635 039
- EP-A1- 2 031 188
- WO-A1-2010/079204
- DE-A1-102005 042 747
- FR-A1- 2 874 977
- US-A- 4 498 790
- US-A1- 2003 113 204
- US-A1- 2013 230 388

## Description

### Arrière-plan de l'invention

La présente invention se rapporte au domaine général des compresseurs de turbomachine, notamment d'un turboréacteur ou d'un turbopropulseur d'avion. Elle vise plus précisément un dispositif permettant de guider les aubes de redresseur à angle de calage variable d'un étage de compresseur.

Le compresseur haute-pression d'une turbomachine aéronautique comprend plusieurs étages d'aubes de redresseur à angle de calage variable qui alternent avec des étages d'aubes mobiles. Les aubes de redresseur permettent de modifier les caractéristiques d'écoulement des gaz selon les régimes de fonctionnement de la turbomachine.

Les aubes de redresseur à angle de calage variable comportent chacune un pivot de commande en tête et un pivot de guidage en pied, le pivot de commande traversant une enveloppe de stator (appelé carter) de la turbomachine et coopérant avec un organe de commande de l'orientation des aubes, et le pivot de guidage étant mobile en rotation dans une douille logée dans un évidement d'un anneau intérieur de la turbomachine. A partir d'une action sur l'organe de commande, il est ainsi possible de modifier l'orientation des aubes de l'étage concerné. On pourra se référer aux documents DE 10 2005 042 747 A1, FR 2,874, 977, US 2013/0230388 A1, FR 2,556,410 et FR 2,723,614 qui décrivent différentes configurations de guidage de telles de redresseur à angle de calage variable.

Le carter de compresseur est généralement réalisé en deux demi-coquilles afin de faciliter le montage. Pour diminuer la masse et augmenter les performances de l'ensemble, il a été proposé de le réaliser en une seule pièce (360°). Or, lorsque le carter du compresseur est monobloc dans le sens tangentiel, le montage des différentes parties du compresseur s'en trouve considérablement compliqué. En particulier, le recours à un carter en deux demi-coquilles permet de monter individuellement les éléments du stator du compresseur qui viennent ensuite entourer ceux du rotor.

Avec un carter monobloc, il est nécessaire d'assembler alternativement un étage de rotor puis un étage de stator. Or, dans certaines configurations de compresseur, l'étage de rotor situé en aval de l'étage de stator à monter ne peut pas être déplacé vers l'aval à cause de la pente du carter. Aussi, dans ce cas, le seul moyen pour insérer les aubes de redresseur dans leurs logements serait de déplacer au maximum l'anneau interne vers le disque de rotor situé en aval. Or, cette manipulation ne permet pas toujours d'insérer les aubes de redresseur sans abîmer les aubes.

Par ailleurs, pour le dimensionnement de la ligne de rotor du compresseur, la ligne de virole de celui-ci doit être la plus proche possible de la veine d'écoulement du flux gazeux traversant celui-ci. Ceci a pour conséquence de réduire l'espace sous la veine, ce qui nécessite de diminuer l'encombrement radial du dispositif de guidage des aubes de redresseur.

### Objet et résumé de l'invention

La présente invention a donc pour but principal de proposer un dispositif de guidage des aubes de redresseur à angle de calage variable ne présentant pas de tels inconvénients.

Conformément à l'invention, ce but est atteint grâce à un dispositif de guidage d'aubes de redresseur à angle de calage variable de turbomachine selon la revendication 1.

Le dispositif selon l'invention est remarquable en ce que le montage des différents éléments qui le constitue (secteurs d'anneau interne, secteurs d'anneau de reconstitution et douilles) et des aubes de redresseur est obtenu par des manipulations qui s'effectuent entièrement selon des directions radiales (de l'intérieur vers l'extérieur). De la sorte, il est possible d'éviter toute interaction entre le rotor et le stator lors du montage d'un étage de stator après l'assemblage d'un étage de rotor. Ce dispositif est ainsi parfaitement adapté à des carters du compresseur qui sont monoblocs (dans le sens tangentiel). De plus, l'encombrement radial d'un tel dispositif est limité.

Chaque secteur d'anneau de reconstitution présente une section transversale en forme de U avec une partie intérieure formant fond et deux bords latéraux s'étendant radialement vers l'extérieur. Dans ce cas, les bords latéraux de chaque secteur d'anneau de reconstitution peuvent présenter chacun des orifices pour le passage d'un élément de blocage.

Les secteurs d'anneau de reconstitution sont montés sur l'anneau interne de sorte à recouvrir des zones inter-secteurs d'anneau interne. Un tel chevauchement des secteurs d'anneau permet d'améliorer l'étanchéité et la rigidité de l'ensemble.

De préférence encore, chaque secteur d'anneau de reconstitution présente à ses extrémités tangentielles des découpes destinées à améliorer l'étanchéité de l'ensemble. De même, toujours dans le but d'améliorer l'étanchéité, le dispositif peut comprendre en outre des plaquettes d'étanchéité positionnées entre deux secteurs d'anneau interne adjacents.

Chaque secteur d'anneau interne présente un perçage positionné angulairement entre deux cheminées adjacentes et traversant axialement le secteur d'anneau interne de part en part pour le passage d'un élément de blocage. Ces éléments de blocage peuvent comprendre chacun une vis venant se serrer dans un écrou serti.

Les secteurs d'anneau de reconstitution portent chacun sur une face intérieure un support de revêtement abradable destiné à coopérer avec des léchettes portées par un rotor.

L'invention a également pour objet un compresseur de turbomachine comprenant au moins un dispositif tel que défini précédemment et une turbomachine comprenant un tel compresseur.

L'invention a encore pour objet un procédé d'assemblage d'un dispositif de guidage d'aubes de redresseur à angle de calage variable de turbomachine tel que défini précédemment, le procédé étant conforme à la revendication 6.

Le procédé peut comprendre en outre le positionnement de plaquettes d'étanchéité entre deux secteurs d'anneau interne adjacents.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique d'un étage de redresseur de compresseur muni d'un dispositif de guidage des aubes selon l'invention ;
- la figure 2 est une vue en perspective d'un secteur d'anneau interne du dispositif de guidage de la figure 1 ;
- la figure 3 est une vue en perspective d'un secteur d'anneau de reconstitution du dispositif de guidage de la figure 1 ;
- la figure 4 est une vue en perspective montrant l'assemblage entre eux de plusieurs secteurs d'anneau interne avec des secteurs d'anneau de reconstitution du dispositif de guidage de la figure 1 ; et
- la figure 5 est une vue en coupe selon V-V de la figure 4.

### Description détaillée de l'invention

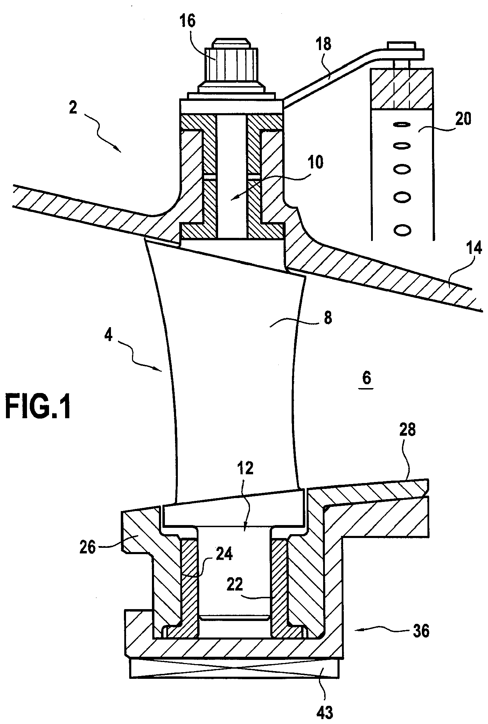

La figure 1 représente de façon schématique un étage de redresseur 2 d'un compresseur de turbomachine aéronautique, par exemple d'un compresseur haute-pression d'un turboréacteur ou d'un turbopropulseur d'avion. Un tel étage de redresseur est disposé en amont d'un étage de rotor (non représenté) du compresseur.

L'étage de redresseur 2 comporte une pluralité d'aubes fixes 4 à angle de calage variable qui sont disposées dans la veine 6 d'écoulement du flux gazeux traversant le compresseur.

Chaque aube 4 à angle de calage variable se présente sous la forme d'une pale 8 se terminant à une extrémité radiale externe (ou tête d'aube) par un pivot de commande 10 (ou pivot supérieur) et à une extrémité radiale interne (ou pied d'aube) par un pivot de guidage 12 (ou pivot inférieur).

Le pivot de commande 10 de l'aube 4 traverse une enveloppe 14 de carter monobloc (dans le sens tangentiel) de la turbomachine et coopère avec un organe de commande de l'orientation des aubes. A cet effet, le pivot de commande se termine typiquement par une tête 16 sur laquelle est engagée une extrémité d'une bielle de commande 18 dont l'autre extrémité coopère avec un anneau de commande 20.

Les bielles de commande 18 et l'anneau de commande 20 forment l'organe de commande de l'orientation des aubes 4. La rotation de l'anneau de commande autour de l'axe longitudinal de la turbomachine permet de faire tourner les bielles de commande et ainsi de modifier simultanément l'orientation de toutes les aubes à angle de calage variable de l'étage du compresseur.

Chaque pivot de guidage 12 est destiné à tourner à l'intérieur d'une douille cylindrique creuse 22 formant support pivotant. Ces douilles 22 sont logées dans des cheminées 24 formées dans un anneau interne 26 de la turbomachine, la douille et la cheminée correspondante étant de formes sensiblement complémentaires.

De façon plus précise, conformément à l'invention, l'anneau interne dans lequel sont formées les cheminées 24 est sectorisé, c'est-à-dire qu'il se présente sous la forme d'une pluralité de secteurs angulaires d'anneau interne 26a (par exemple supérieur à 8, et de préférence supérieur à 12) qui sont mis bout à bout dans le sens tangentiel pour former un anneau de 360°.

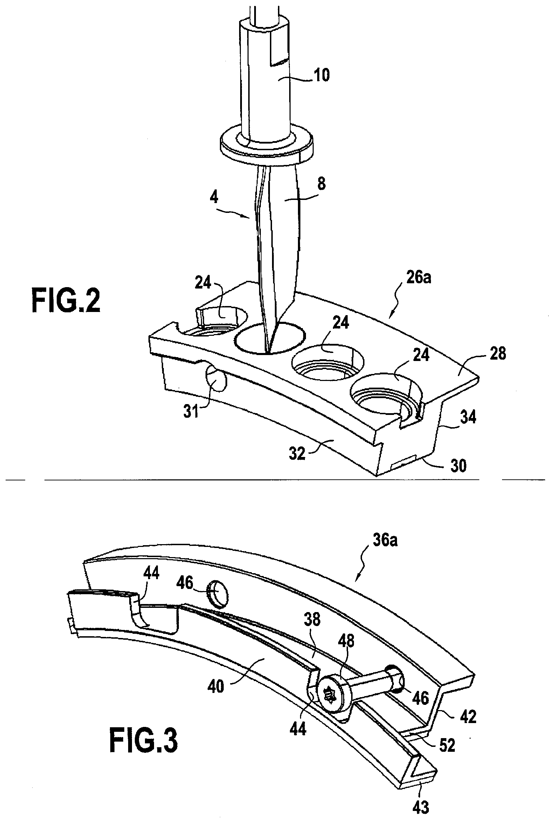

La figure 2 représente en perspective un secteur d'anneau interne 26a. Celui-ci comprend une face extérieure 28 qui est destinée à délimitée à l'intérieur la veine d'écoulement du flux gazeux traversant le compresseur, et une face intérieure 30 opposée radialement à la face extérieure. Les cheminées 24 (ici au nombre de 4 pour un même secteur d'anneau interne) traversent radialement de part en part le secteur d'anneau interne entre ses faces extérieure et intérieure.

Chaque secteur d'anneau interne 26a comprend également un perçage 31 qui est positionné angulairement entre deux cheminées adjacentes et qui traverse axialement le secteur d'anneau interne de part en part entre une face latérale amont 32 et une face latérale aval 34 du secteur d'anneau interne. Ce perçage 31 est destiné au passage d'un élément de blocage décrit ultérieurement.

Par ailleurs, le dispositif de guidage selon l'invention comprend un anneau de reconstitution 36 qui est destiné à venir s'assembler radialement par l'intérieur sur l'anneau interne 26.

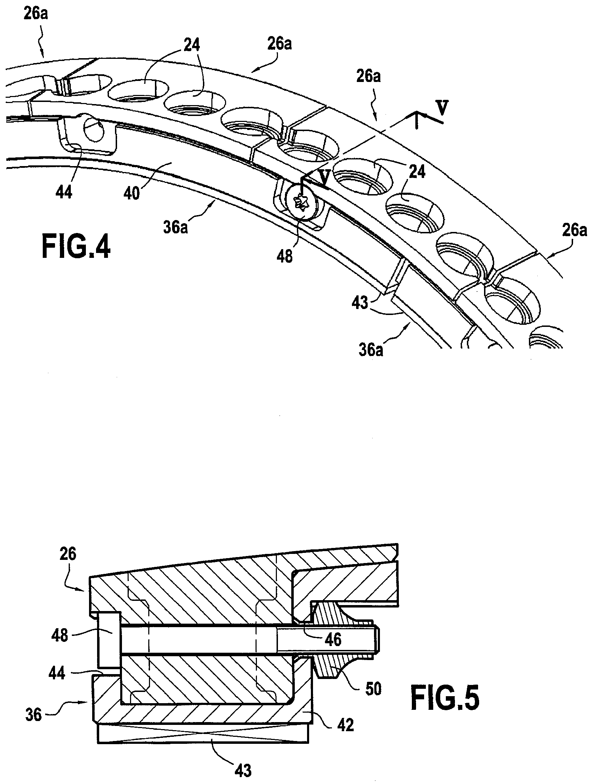

A cet effet, l'anneau de reconstitution est sectorisé, c'est-à-dire qu'il se présente également sous la forme d'une pluralité de secteurs angulaires d'anneau de reconstitution 36a (par exemple supérieur à 8, et de préférence supérieur à 12) qui sont mis bout à bout dans le sens tangentiel pour former un anneau de 360°. Le nombre de secteurs d'anneau de reconstitution est choisi de telle manière qu'un secteur d'anneau de reconstitution chevauche au moins deux secteurs d'anneau interne 26a adjacents (comme représenté sur la figure 4).

La figure 3 représente en perspective un secteur d'anneau de reconstitution 36a. Celui-ci présente une section transversale en forme de U avec une partie intérieure 38 formant fond et deux bords latéraux, à savoir un bord latéral amont 40 et un bord latéral aval 42, s'étendant radialement vers l'extérieur. Cette section transversale en forme de U permet de recevoir radialement les faces latérales 32, 34 et la face intérieure 30 d'un secteur d'anneau interne 26a. Quant au fond 38, il porte sur sa face intérieure un support de revêtement abradable 43 destiné à coopérer avec des léchettes portées par un rotor (non représentées sur les figures).

Les bords latéraux 40, 42 de chaque secteur d'anneau de reconstitution 36a présentent chacun des orifices pour le passage d'un élément de blocage. Plus précisément, dans l'exemple représenté sur la figure 3, le bord latéral amont 40 de chaque secteur d'anneau de reconstitution comprend deux encoches 44 et le bord latéral aval 42 comporte deux trous 46 pour le passage d'éléments de blocage.

Comme représenté sur les figures 3 à 5, les éléments de blocage comprennent ici chacun une vis 48 venant se serrer dans un écrou 50 serti, la vis étant assemblée depuis l'amont vers l'aval et l'écrou étant serti dans un secteur d'anneau de reconstitution 36a.

Le montage du dispositif de guidage selon l'invention découle de manière évidente de ce qui précède. Une fois montées les aubes de l'étage de rotor situé directement en aval de l'étage de redresseur 2, les pivots de commande 10 des aubes 4 sont montées radialement par l'intérieur dans leur logement dans l'enveloppe de carter 14. Les secteurs d'anneau interne 26a sont alors montés radialement par l'intérieur en positionnant les pivots de guidage 12 des aubes dans les cheminées 24 de façon à former l'anneau interne 26.

Les douilles 22 sont ensuite insérées radialement depuis l'intérieur dans les cheminées 24 autour des pivots de guidage 12 des aubes pour reprendre les jeux de montage existant entre les cheminées et les pivots de guidage des aubes pour permettre le montage des secteurs d'anneau interne .

Les secteurs d'anneau de reconstitution 36a sont alors assemblés sur les secteurs d'anneau interne 26a en venant les positionner radialement par l'intérieur sur les secteurs d'anneau interne. Les secteurs d'anneau de reconstitution sont plus précisément montés de sorte à permettre de faire coïncider angulairement les perçages 31 pratiqués dans les secteurs d'anneau interne avec les encoches 44 et trous 46 pratiqués dans les secteurs d'anneau de reconstitution.

Par ailleurs, de préférence, comme représenté sur la figure 4, les secteurs d'anneau de reconstitution 36a sont montés sur l'anneau interne de sorte à recouvrir les zones inter-secteurs d'anneau interne de façon à améliorer l'étanchéité de l'ensemble.

Une fois montés les secteurs d'anneau de reconstitution, les vis 48 sont insérées au travers des perçages 31 pratiqués dans les secteurs d'anneau interne et serrées dans les écrous 50 préalablement sertis contre le bord latéral aval 42 des secteurs d'anneau de reconstitution. Les vis permettent d'assurer un blocage tangentiel de l'anneau de reconstitution.

Le montage du dispositif de guidage selon l'invention est ainsi réalisé par des manipulations qui s'effectuent uniquement selon des directions radiales, de l'intérieur vers l'extérieur.

Selon une disposition avantageuse illustrée sur la figure 3, chaque secteur d'anneau de reconstitution 36a présente à ses extrémités tangentielles des découpes 52 destinées à améliorer l'étanchéité de l'ensemble.

Selon une autre disposition avantageuse non représentée sur les figures, il est prévu de positionner des plaquettes d'étanchéité entre deux secteurs d'anneau interne adjacents de façon à améliorer l'étanchéité de l'ensemble.

## Revendications

1. Dispositif de guidage d'aubes de redresseur à angle de calage variable de turbomachine, comprenant :
une pluralité de secteurs angulaires d'anneau interne (26a) mis bout à bout selon une direction circonférentielle pour former un anneau interne (26), chaque secteur d'anneau interne (26a) comprenant une face intérieure (30) radialement opposée à une face extérieure (28) destinée à délimiter à l'intérieur une veine d'écoulement d'un flux gazeux, deux faces latérales (32, 34), des cheminées (24) traversant radialement de part en part le secteur d'anneau interne entre ses faces intérieure (30) et extérieure (28), et un perçage (31) positionné angulairement entre deux cheminées (24) adjacentes et traversant axialement le secteur d'anneau interne (26a) de part en part entre ses deux faces latérales (32, 34) pour le passage d'un élément de blocage ;
une pluralité de douilles cylindriques (22) qui sont chacune montées dans une cheminée de l'anneau interne par l'intérieur et qui sont chacune destinées à recevoir un pivot de guidage (12) d'une aube de redresseur (4) ;
une pluralité de secteurs angulaires d'anneau de reconstitution (36a) qui sont mis bout à bout selon une direction circonférentielle pour former un anneau de reconstitution (36) et qui sont montés radialement par l'intérieur sur l'anneau interne ; et
une pluralité d'éléments de blocage (48, 50) traversant axialement les anneaux interne et de reconstitution pour assembler lesdits anneaux entre eux ;
le dispositif étant **caractérisé en ce que** chaque secteur d'anneau de reconstitution (36a) présente une section transversale en forme de U avec une partie intérieure (38) formant fond et deux bords latéraux (40, 42) s'étendant radialement vers l'extérieur, la section transversale en forme de U d'un secteur d'anneau de reconstitution (36a) recevant radialement les faces latérales (32, 34) et la face intérieure (30) d'un secteur d'anneau interne (26a), et les secteurs d'anneau de reconstitution (36a) portant chacun sur une face intérieure un support de revêtement abradable (43) destiné à coopérer avec des léchettes portées par un rotor,
les secteurs d'anneau de reconstitution (36a) étant montés sur l'anneau interne (26) de sorte à recouvrir des zones inter-secteurs d'anneau interne.

2. Dispositif selon la revendication 1, dans lequel les bords latéraux (40, 42) de chaque secteur d'anneau de reconstitution (36a) présentent chacun des orifices (44, 46) pour le passage d'un élément de blocage.

3. Dispositif selon l'une quelconque des revendications 1 ou 2, dans lequel les éléments de blocage comprennent chacun une vis (48) venant se serrer dans un écrou (50) serti.

4. Compresseur de turbomachine comprenant au moins un dispositif selon l'une quelconque des revendications 1 à 3.

5. Turbomachine comprenant un compresseur selon la revendication 4.

6. Procédé d'assemblage d'un dispositif de guidage d'aubes de redresseur à angle de calage variable de turbomachine selon l'une quelconque des revendications 1 à 3, comprenant successivement :
l'insertion de pivots de guidage (12) d'aubes de redresseur (4) au travers d'une enveloppe monobloc (14) de carter ;
le montage radial de l'ensemble des secteurs d'anneau interne (26a) en insérant les pivots de guidage des aubes de redresseur dans les cheminées (24) desdits secteurs d'anneau interne, chaque secteur d'anneau interne (26a) comprenant une face intérieure (30) radialement opposée à une face extérieure (28) destinée à délimiter à l'intérieur une veine d'écoulement d'un flux gazeux, deux faces latérales (32, 34), et un perçage (31) positionné angulairement entre deux cheminées (24) adjacentes et traversant axialement le secteur d'anneau interne (26a) de part en part entre ses deux faces latérales (32, 34) pour le passage d'un élément de blocage, les cheminées (24) traversant radialement de part en part le secteur d'anneau interne entre ses faces intérieure (30) et extérieure (28) ;
l'insertion par l'intérieur des douilles (22) dans les cheminées des secteurs d'anneau interne afin de reprendre le jeu existant entre les cheminées et les pivots de guidage des aubes pour permettre le montage des secteurs d'anneau interne ;
l'assemblage radial par l'intérieur des secteurs d'anneau de reconstitution (36a) sur les secteurs d'anneau interne ; et
l'insertion des éléments de blocage (48, 50) sur les secteurs d'anneau interne et les secteurs d'anneau de reconstitution pour assembler les anneaux entre eux ;
chaque secteur d'anneau de reconstitution (36a) présentant une section transversale en forme de U avec une partie intérieure (38) formant fond et deux bords latéraux (40, 42) s'étendant radialement vers l'extérieur, la section transversale en forme de U d'un secteur d'anneau de reconstitution (36a) recevant radialement les faces latérales (32, 34) et la face intérieure (30) d'un secteur d'anneau interne (26a), et les secteurs d'anneau de reconstitution (36a) portant chacun sur une face intérieure un support de revêtement abradable (43) destiné à coopérer avec des léchettes portées par un rotor,
les secteurs d'anneau de reconstitution (36a) étant montés sur l'anneau interne (26) de sorte à recouvrir des zones inter-secteurs d'anneau interne.

## Patentansprüche

1. Vorrichtung zum Führen von Leitschaufeln mit variablem Anstellwinkel einer Turbomaschine, umfassend
eine Vielzahl von winkeligen Innenringsektoren (26a), die in einer Umfangsrichtung aneinander gefügt sind, um einen Innenring (26) zu bilden, wobei jeder Innenringsektor (26a) eine Innenseite (30), die einer Außenseite (28), welche dazu bestimmt ist, innen einen Strömungskanal eines Gasstroms zu begrenzen, radial gegenüberliegt, zwei Seitenflächen (32, 34), Schächte (24), welche den Innenringsektor zwischen seiner Innenseite (30) und seiner Außenseite (28) vollständig radial durchqueren, sowie eine Bohrung (31) aufweist, die zwischen zwei benachbarten Schächten (24) winkelig positioniert ist und den Innenringsektor (26a) zwischen seinen beiden Seitenflächen (32, 34) für den Durchgang eines Blockierelements vollständig axial durchquert;
eine Vielzahl von zylindrischen Buchsen (22), die jeweils von innen in einem Schacht des Innenrings angebracht sind und die jeweils dazu bestimmt sind, einen Führungszapfen (12) einer Leitschaufel (4) aufzunehmen,
eine Vielzahl von winkeligen Rekonstruktionsringsektoren (36a), die in einer Umfangsrichtung aneinander gefügt sind, um einen Rekonstruktionsring (36) zu bilden, und die radial von innen an dem Innenring angebracht sind, und
eine Vielzahl von Blockierelementen (48, 50), welche die Innen- und Rekonstruktionsringe axial durchgreifen, um die Ringe untereinander zusammenzufügen,
wobei die Vorrichtung **dadurch gekennzeichnet ist, dass**
jeder Rekonstruktionsringsektor (36a) einen U-förmigen Querschnitt mit einem einen Boden bildenden Innenteil (38) und zwei sich radial nach außen erstreckenden Seitenkanten (40, 42) aufweist, wobei der U-förmige Querschnitt eines Rekonstruktionsringsektors (36a) die Seitenflächen (32, 34) und die Innenseite (30) eines Innenringsektors (26a) radial aufnimmt, und wobei die Rekonstruktionsringsektoren (36a) jeweils auf einer Innenseite einen Abriebbeschichtungsträger (43) tragen, der dazu bestimmt ist, mit von einem Rotor getragenen Zungen zusammenzuwirken,
wobei die Rekonstruktionsringsektoren (36a) an dem Innenring (26) angebracht sind, um Zwischensektorbereiche des Innenrings zu bedecken.

2. Vorrichtung nach Anspruch 1, bei der die Seitenkanten (40, 42) eines jeden Rekonstruktionsringsektors (36a) jeweils Öffnungen (44, 46) für den Durchgang eines Blockierelements aufweisen.

3. Vorrichtung nach einem der Ansprüche 1 oder 2, bei der die Blockierelemente jeweils eine Schraube (48) umfassen, die in einer Einpressmutter (50) festgezogen wird.

4. Verdichter einer Turbomaschine, der wenigstens eine Vorrichtung nach einem der Ansprüche 1 bis 3 umfasst.

5. Turbomaschine, die einen Verdichter nach Anspruch 4 umfasst.

6. Verfahren zur Montage einer Vorrichtung zum Führen von Leitschaufeln mit variablem Anstellwinkel einer Turbomaschine nach einem der Ansprüche 1 bis 3, nacheinander umfassend:
das Einsetzen von Führungszapfen (12) von Leitschaufeln (4) durch einen einstückigen Gehäusemantel (14) hindurch,
das radiale Anbringen aller Innenringsektoren (26a) durch Einsetzen der Führungszapfen der Leitschaufeln in die Schächte (24) der Innenringsektoren, wobei jeder Innenringsektor (26a) eine Innenseite (30), die einer Außenseite (28), welche dazu bestimmt ist, innen einen Strömungskanal eines Gasstroms zu begrenzen, radial gegenüberliegt, zwei Seitenflächen (32, 34) sowie eine Bohrung (31) aufweist, die zwischen zwei benachbarten Schächten (24) winkelig positioniert ist und den Innenringsektor (26a) zwischen seinen beiden Seitenflächen (32, 34) für den Durchgang eines Blockierelements vollständig axial durchquert, wobei die Schächte (24) den Innenringsektor zwischen seiner Innenseite (30) und seiner Außenseite (28) vollständig radial durchquert,
das Einsetzen der Buchsen (22) von innen in die Schächte der Innenringsektoren, um das Spiel zwischen den Schächten und den Führungszapfen der Schaufeln auszugleichen, um das Anbringen der Innenringsektoren zu ermöglichen,
das radiale Zusammenfügen der Rekonstruktionsringsektoren (36a) von innen an den Innenringsektoren, und
das Einsetzen der Blockierelemente (48, 50) an den Innenringsektoren und den Rekonstruktionsringsektoren, um die Ringe untereinander zusammenzufügen,
wobei jeder Rekonstruktionsringsektor (36a) einen U-förmigen Querschnitt mit einem einen Boden bildenden Innenteil (38) und zwei sich radial nach außen erstreckenden Seitenkanten (40, 42) aufweist, wobei der U-förmige Querschnitt eines Rekonstruktionsringsektors (36a) die Seitenflächen (32, 34) und die Innenseite (30) eines Innenringsektors (26a) radial aufnimmt, und wobei die Rekonstruktionsringsektoren (36a) jeweils auf einer Innenseite einen Abriebbeschichtungsträger (43) tragen, der dazu bestimmt ist, mit von einem Rotor getragenen Zungen zusammenzuwirken,
wobei die Rekonstruktionsringsektoren (36a) an dem Innenring (26) angebracht sind, um Zwischensektorbereiche des Innenrings zu bedecken.

## Claims

1. A device for guiding variable pitch stator vanes of a turbine engine, the device comprising:
a plurality of inner ring angular sectors (26a) arranged end-to-end in a circumferential direction in order to form an inner ring (26), each inner ring sector (26a) having an inner face (30) that is radially opposite from an outer face (28) for defining the inside of the flow passage of the gas stream, two side faces (32, 34), chimneys (24) passing radially through the inner ring sector between its inner face (30) and outer face (28), and a hole (31) that is angularly positioned between two adjacent chimneys (24) and that passes axially right through the inner ring sector in order to pass a blocking element;
a plurality of cylindrical bushings (22), each being put into place in a chimney of the inner ring from the inside and each serving to receive a guide pivot (12) of a stator vane (4);
a plurality of reconstitution ring angular sectors (36a) arranged end-to-end in a circumferential direction in order to form a reconstitution ring (36) and put into place radially from the inside against the inner ring; and
a plurality of blocking elements (48, 50) passing axially through the inner and reconstitution rings in order to assemble said rings together; the device being **characterized in that** each reconstitution ring sector (36a) presents a channel section having a U shape with an inner portion (38) forming a web and two side edges (40, 42) extending radially outwards, the channel section of a reconstitution ring sector (36a) radially receiving the side faces (32, 34) and the inner face (30) of an inner ring sector (26a), and each reconstitution ring sector (36a) carrying on an inside face a support for an abradable coating (43) for co-operating with wipers carried by a rotor,
the reconstitution ring sectors (36a) being put into place against the inner ring (26) in such a manner as to cover the inter-sector zones of the inner ring.

2. A device according to claim 1, wherein each side edge (40, 42) of each reconstitution ring sector (36a) presents orifices (44, 46) for passing a blocking element.

3. A device according to any one of claims 1 or 2, wherein each blocking element comprises a bolt (48) that is tightened in a crimped nut (50).

4. A turbine engine compressor including at least one device according to any one of claims 1 to 3.

5. A turbine engine including a compressor according to claim 4.

6. A method of assembling a guide device for variable pitch stator vanes in a turbine engine according to any one of claims 1 to 3, the method comprising in succession:
inserting control pivots (12) for stator vanes (4) through a single-piece casing shell (14);
putting the set of inner ring sectors (26a) into place radially while inserting the guide pivots of the stator vanes in the chimneys (24) of said inner ring sectors, each inner ring sector (26a) having an inner face (30) that is radially opposite from an outer face (28) for defining the inside of the flow passage of the gas stream, two side faces (32, 34), and a hole (31) that is angularly positioned between two adjacent chimneys (24) and that passes axially right through the inner ring sector between its two side faces (32, 34) in order to pass a blocking element, the chimneys (24) passing radially through the inner ring sector between its inner face (30) and outer face (28);
inserting bushings (22) from the inside into the inner ring sector chimneys in order to take up the clearance that exists between the chimneys and the vane guide pivots so as to enable the inner ring sectors to be put into place;
assembling the reconstitution ring sectors (36a) radially from the inside against the inner ring sectors; and
inserting blocking elements (48, 50) in the inner ring sectors and the reconstitution ring sectors in order to assemble the rings together,
each reconstitution ring sector (36a) presenting a channel section having a U shape with an inner portion (38) forming a web and two side edges (40, 42) extending radially outwards, the channel section of each reconstitution ring sector (36a) radially receiving the side faces (32, 34) and the inner face (30) of an inner ring sector (26a), and each reconstitution ring sector (36a) carrying on an inside face a support for an abradable coating (43) for co-operating with wipers carried by a rotor,
the reconstitution ring sectors (36a) being put into place against the inner ring (26) in such a manner as to cover the inter-sector zones of the inner ring.
